## Europäisches Patentamt

## European Patent Office

## Office européen des brevets

(19)

(11) Veröffentlichungsnummer: **0 229 324**
**B1**

(12)

# EUROPÄISCHE PATENTSCHRIFT

(45) Veröffentlichungstag der Patentschrift:
**11.07.90**

(21) Anmeldenummer: **86117218.7**

(22) Anmeldetag: **10.12.86**

(51) Int. Cl.⁵: **H04B 1/08, H01R 13/66**

(54) **Radiogerät mit Netzanschlussstecker.**

(30) Priorität: **11.12.85 DE 8534781 U**
**08.04.86 DE 8609414 U**

(43) Veröffentlichungstag der Anmeldung:
**22.07.87 Patentblatt 87/30**

(45) Bekanntmachung des Hinweises auf die Patenterteilung:
**11.07.90 Patentblatt 90/28**

(84) Benannte Vertragsstaaten:
**AT BE CH DE ES FR GB GR IT LI LU NL SE**

(56) Entgegenhaltungen:
**EP-A- 0 167 031**
**BE-A- 874 940**
**DE-A- 2 701 524**
**DE-A- 3 104 749**
**DE-A- 3 300 936**
**FR-A- 2 070 998**
**US-A- 2 934 639**
**US-A- 3 458 794**
**US-A- 4 434 509**

(73) Patentinhaber: **Brunnquell GmbH Fabrik elektrotechnischer Apparate, Ettinger Strasse 32, D-8070 Ingolstadt(DE)**

(72) Erfinder: **Wilke, Hein, Tannenweg 21, D-8071 Stammham-Westerhofen(DE)**

(74) Vertreter: **Tergau, Enno et al, Patentanwälte Tergau & Pohl Postfach 11 93 47 Hefnersplatz 3, D-8500 Nürnberg 11(DE)**

ACTORUM AG

## Beschreibung

Die Erfindung betrifft ein Radiogerät mit Netzanschluß.

Bei derartigen Radiogeräten ist der Netzanschluß in der Regel durch einen Leitungsstecker hergestellt.

Aus der BE-A 874 940 ist ein Radiogerät mit Netzanschluß bekannt, welches einen geringen Platzbedarf hat, leicht und dadurch als Reisegerät verwendbar ist und vor allen Dingen zu seiner Aufstellung keinen anderweitig als Aufstellfläche nutzbaren Platz benötigt. Der Erfindung liegt die Aufgabe zugrunde zu vermeiden, daß sich die Bedienungsperson zur Betätigung der Bedienelemente allzusehr bücken muß und eine Voraussetzung dafür zu schaffen, daß bei Mehrfachsteckdosen die benachbarten Einstecköffnungen weiterverwendet werden können. Die Aufgabe wird durch das Kennzeichnungsmerkmal des Anspruches 1 gelöst.

Das Radiogerät nach der Erfindung bedarf zu seiner Aufstellung lediglich des Einsteckens in eine übliche Steckdose, insbesondere in eine Schutzkontaktsteckdose. Es ist gewissermaßen selbst als Stecker ausgebildet. Seine elektrische Versorgung erfolgt über die Steckerstifte des Netzanschlußsteckers, wobei das elektrische Versorgungsnetz gleichzeitig die Wirkung einer Antenne hat. Ein Teil des Innenraumes des Netzanschlußsteckers kann zu Miniaturisierungszwecken bereits zur Unterbringung von Funktionsteilen des Radiogerätes verwendet werden. Soweit als Bedienelemente Drehknöpfe vorhanden sind, ist eine reine Einhandbedienung möglich, weil das Radiogerät durch die Steckerstifte festgehalten ist und somit zur Aufnahme der Reaktionskräfte nicht die Zuhilfenahme einer weiteren Bedienungshand erfordert. Das Radiogerät wird in der Regel in in eine Wandsteckdose eingestecktem Zustand betrieben. Solche Wandsteckdosen befinden sich in der Regel in einer relativ geringen Höhe oberhalb des Fußbodens eines Raumes. Durch die Erfindung ist eine Anordnung der Bedienelemente bzw. Drehknöpfe in einem möglichst großen Abstand zum Fußboden möglich, so daß sich die Bedienungsperson zu ihrer Betätigung nicht allzusehr zu bücken braucht. Die symmetrische Anordnung zur vertikalen Mittelebene erleichtert, in Zusammenhang mit dem Kennzeichnungsmerkmal des Anspruchs 3, die Ausbildung des Radiogeräts nach dem Anspruch 4.

Durch das Kennzeichnungsmerkmal des Anspruches 3 lädt das Gerät beidseitig gleichweit über die Einstecköffnung der Steckdose aus. Durch das Kennzeichnungsmerkmal des Anspruches 4 ist es möglich, bei Mehrfachsteckdosen durch die Verwendung des erfindungsgemäßen Radiogeräts die benachbarten Einstecköffnungen unbeeinträchtigt weiterverwenden zu können, insbesondere auch ein weiteres, erfindungsgemäßes Radiogerät einstecken zu können, ohne daß eine gegenseitige Behinderung stattfindet.

Bei einer Ausbildung und Anordnung des Lautsprechergehäuses gemäß Anspruch 5 können die Bedienknöpfe in den beiden oberen Eckbereichen der Vorderseite des Radiogerätes angeordnet werden, ohne eine möglichst große, der Tonqualität des Lautsprechers förderliche Ausbildung des Lautsprechergehäuses trotz der kleinen Abmessungen des Radiogerätes zu beeinträchtigen.

Durch das Kennzeichnungsmerkmal des Anspruches 6 gestaltet sich das Radiogerät besonders reparaturfreundlich. Alle Teile sind durch die Lage der Teilfugenebene zwischen den beiden lösbar miteinander verbundenen Gehäuseschalen gut zugänglich.

Durch das Kennzeichnungsmerkmal des Anspruches 7 ist ein besonders guter Haftsitz des Radiogerätes in einer Steckdose gewährleistet. Durch diesen Sitz können vergleichsweise hohe Reaktionskräfte aufgenommen werden, wie sie beispielsweise bei einer gewissen Schwergängigkeit der Bedienelemente auftreten können.

Der Gegenstand der Erfindung wird anhand der Figuren beispielsweise erläutert. Es zeigen:

Fig. 1 eine frontale Draufsicht auf die Vorderseite des Radiogeräts;
Fig. 2 eine Seitenansicht des Radiogeräts;
Fig. 3 einen mittigen Vertikalschnitt durch das Radiogerät entsprechend der Linie III - III in Fig. 1;
Fig. 4 einen Schnitt entsprechend der Linie IV - IV in Fig. 3;
Fig. 5 einen Schnitt entsprechend der Linie V - V in Fig. 4.

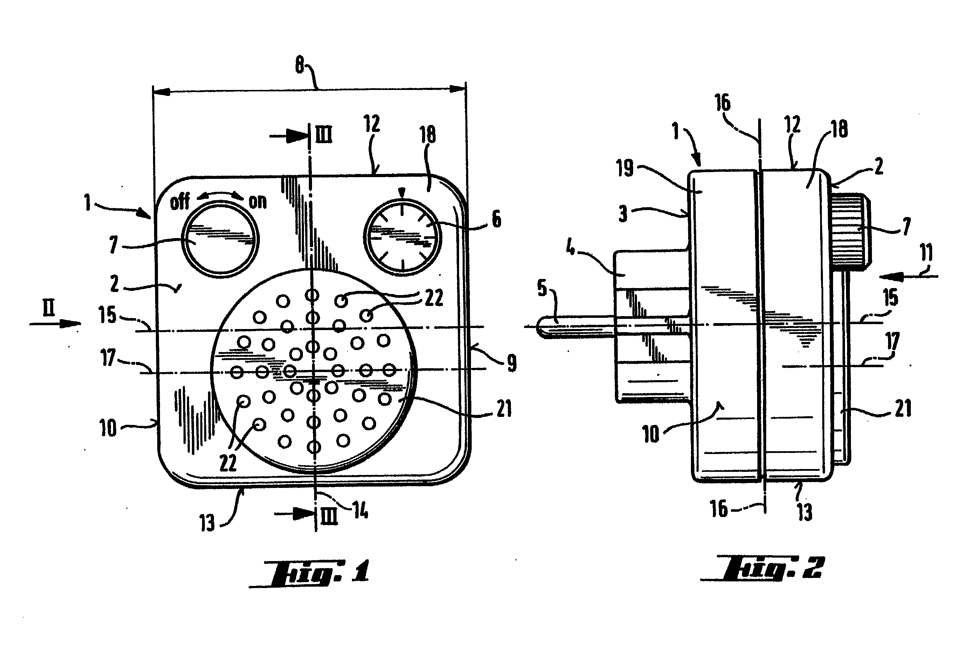

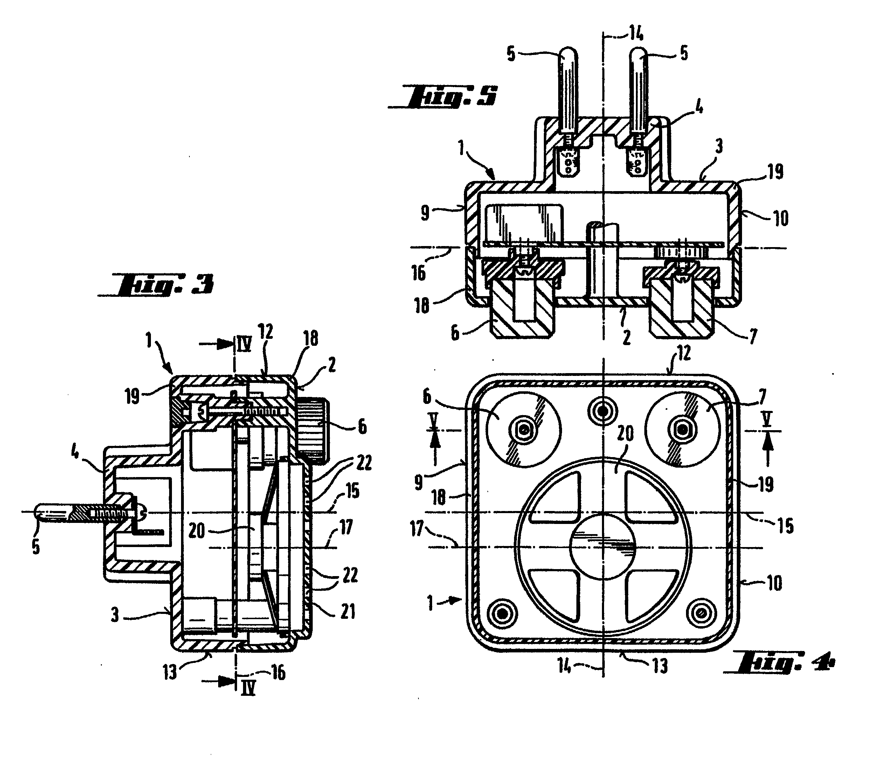

Die Funktionsteile des Radiogeräts sind in einem Gehäuse (1) mit der Vorderseite (2) und der dazu etwa parallellaufenden Rückwand (3) untergebracht. Die Rückwand (3) ist einstückig mit dem Netzanschlußstecker (4) ausgebildet. Dessen Steckerstifte (5) stehen etwa rechtwinklig zur Rückwand (3) nach hinten hinaus. Der Netzanschlußstecker (4) ist integriertes Teil der Geräterückwand (3).

Auf der Gerätevorderseite (2) sind zwei Drehknöpfe (6,7) zur Senderauswahl (Drehknopf 6) und Ein- und Ausschaltung sowie Lautstärkenregulierung (Drehknopf 7) angeordnet.

Der Netzanschlußstecker (4) ist mittig an der Geräterückwand (3) angeordnet. Die Maximalbreite (8) des Gehäuses (1) ist so bemessen, daß es in in eine Steckdosenleiste oder Mehrfachsteckdose eingestecktem Zustand nicht den freien Zugang zur benachbarten Einstecköffnung behindert, insbesondere mit seinen vertikalen Seitenwänden (9,10) nicht über die Hälfte des Abstandes zwischen zwei benachbarten Einstecköffnungen derselben Steckdosenleiste oder Mehrfachsteckdose (nicht gezeigt) hinaussteht. Die Umrißform des Gerätegehäuses ist in Vorderansicht (Pfeilrichtung 11) quadratisch. Die Ober- und Unterseite (12 bzw. 13) verlaufen parallel zu einer die Steckerstifte (5) enthaltenden Ebene.

Die Mittellängsachse (17) des zur Gerätevorderseite (2) ausstrahlenden Lautsprechers (20) bzw. seiner Schallaustrittsöffnungen (22) verläuft außermittig unterhalb der die Steckerstifte (5) enthaltenden Mittelebene (15). Die beiden als Drehknöpfe (6,7) ausgebildeten Bedienelemente liegen symmetrisch zu derjenigen vertikalen Mittelebene (14) des Radiogerätes, die senkrecht zu der die Steckerstifte (5) enthaltenden horizontalen Mittelebene (15) verläuft. Sie sind oberhalb der horizontalen Mittelebene (15) außerhalb des Schallaustrittsbereiches des Lautsprechers (20) bzw. des kreisrunden Lautsprechergehäuses (21) angeordnet. Das kreisrunde Lautsprechergehäuse (21) ist in die Gehäusewand der Gerätevorderseite (2) (Gehäuseschale 19) integriert und liegt mit seiner Mittelachse (17) in der vertikalen Mittelebene (14) des Radiogerätes.

Das Gerätegehäuse (1) ist zweischalig aufgebaut. Die Gerätevorderseite (2) und die Geräterückwand (3) sind unterschiedlichen Gehäuseschalen (18,19) zugeordnet. Die Teilfuge zwischen beiden Gehäuseschalen (18,19) verläuft etwa mittig zwischen Vorderseite (2) und Rückwand (3) in einer senkrecht zur horizontalen Ebene (15) und zur vertikalen Mittelebene (14) liegenden Teilfugenebene (16). Der Netzanschlußstecker (4) ist ein Schutzkontaktstecker mit Randerdung, der dadurch besonders fest in einer Wandsteckdose haftet.

Bezugszeichen

1 Gehäuse
2 Vorderseite
3 Rückwand
4 Netzanschlußstecker
5 Steckerstift
6 Drehknopf
7 Drehknopf
8 Breite
9 Seitenwand
10 Seitenwand
11 Pfeilrichtung
12 Oberseite
13 Unterseite
14 vertikale Mittelebene
15 horizontale Mittelebene
16 Teilfugenebene
17 Mittelachse
18 Gehäuseschale
19 Gehäuseschale
20 Lautsprecher
21 Lautsprechergehäuse
22 Schallaustrittsöffnungen

**Patentansprüche**

1. Radiogerät mit Netzanschluß, wobei
- der Netzanschlußstecker (4) ortsfest mit der Geräterückwand (3) verbunden mit seinen Steckerstiften (5) aus der Geräterückwand (3) hinaussteht oder Teil der Geräterückwand (3) ist, derart, daß das Radiogerät in seiner Betriebsstellung von einer beispielsweise in einer Gebäudewand verankerten Steckdose gehalten werden kann,
dadurch gekennzeichnet, daß
- die Mittellängsachse (17) des zur Gerätevorderseite (2) ausstrahlenden Lautsprechers (20) bzw. seiner Schallaustrittsöffnungen (22) außermittig unterhalb der die Steckerstifte (5) enthaltenden Mittelebene (15) verläuft und
- zwei als Knöpfe (6,7) ausgebildete Bedienelemente symmetrisch zu derjenigen vertikalen Mittelebene (14) des Radiogerätes liegen, die parallel zu den Steckerstiften (5) und senkrecht zu der die Steckerstifte (5) enthaltenden, horizontalen Mittelebene (15) verläuft, und oberhalb der horizontalen Mittelebene (15) außerhalb des Schallaustrittsbereiches des Lautsprechers (20) bzw. außerhalb des Lautsprechergehäuses (21) angeordnet sind.

2. Radiogerät nach Anspruch 1,
gekennzeichnet durch
eine rechteckige, insbesondere durch eine quadratische Umrißform der Vorderseite des Gerätegehäuses (1), wobei zwei Gehäuseseiten parallel zu einer die Steckerstifte (5) enthaltenden horizontalen Ebene verlaufen.

3. Radiogerät nach Anspruch 1 oder 2,
dadurch gekennzeichnet,
daß der Netzanschlußstecker (4) mittig an der Geräterückwand (3) angeordnet ist.

4. Radiogerät nach Anspruch 3,
dadurch gekennzeichnet,
daß die Breite (8) des Gehäuses (1) so bemessen ist, daß es in in eine Steckdosenleiste oder Mehrfachsteckdose eingestecktem Zustand nicht den freien Zugang zur benachbarten Einstecköffnung behindert, insbesondere mit seinen Seitenwänden (9,10) nicht über die Hälfte des Abstandes zwischen zwei benachbarten Einstecköffnungen hinaussteht.

5. Radiogerät nach einem oder mehreren der vorhergehenden Ansprüche,
gekennzeichnet durch
ein mit seiner Mittelachse (17) in der vertikalen Mittelebene (14) liegendes, kreisrundes, in die Gehäusewand der Gerätevorderseite integriertes Lautsprechergehäuse (21).

6. Radiogerät nach einem oder mehreren der vorgenannten Ansprüche,
gekennzeichnet durch
einen zweischaligen Aufbau des Gerätegehäuses (1),
- dessen Gerätevorderseite (2) und Geräterückwand (3) unterschiedlichen Gehäuseschalen (18,19) zugeordnet sind,
wobei die Teilfuge zwischen beiden Gehäuseschalen (18,19) etwa mittig zwischen Vorderseite (2) und Rückwand (3) in einer senkrecht zur horizontalen Ebene (15) und zur vertikalen Mittelebene (14) liegenden Teilfugenebene (16) verläuft.

7. Radiogerät nach einem oder mehreren der vorgenannten Ansprüche,
dadurch gekennzeichnet,
daß der Netzanschlußstecker (4) ein Schutzkontaktstecker mit Randerdung ist.

**Claims**

1. A radio apparatus with a mains supply plug, wherein
- the mains connection plug (4) is in a stationary manner connected to the rear wall (3) of the apparatus, with its connector pins (5) projecting out of said rear wall (3), or is part of said rear wall (3) in such a manner that in its operating position the radio apparatus can be held, for example, by a socket fixed in the wall of a building, characterized in that
- the centre longitudinal axis (17) of the loudspeaker (20) emitting the sound towards the front side (2) of the apparatus, or its sound exit openings (22), extends eccentrically beneath a centre plane (15) containing the connector pins, and
- two control elements formed as rotary knobs (6, 7) are symmetrically disposed with respect to the vertical centre plane (14) of the radio apparatus which extends parallel with the connector pins (5) and perpendicularly to the horizontal centre plane (15) containing the connector pins (5), and above the horizontal centre plane (15) outside the sound exit region of the loudspeaker (20) or outside the loudspeaker housing (21).

2. A radio apparatus according to claim 1, characterized by a rectangular, in particular a square, outline of the front side of the housing (1), and two sides of the housing extending parallel to a horizontal plane containing the connector pins (5).

3. A radio apparatus according to claim 1 or 2, characterized in that the mains connection plug (4) is disposed centrally on the rear wall (3) of the apparatus.

4. A radio apparatus according to claim 3, characterized in that the width (8) of the housing (1) is so dimensioned that when inserted into a mains socket strip or multiple socket unit it does not obstruct free access to the adjacent socket opening, and in particular does not project with its side walls (9, 10) beyond half the distance between two adjacent sockets.

5. A radio apparatus according to any or several of the preceding claims, characterized by a circular loudspeaker housing (21) having its centre axis (17) in the vertical centre plane (14) and integrated into the housing wall of the front side of the apparatus.

6. A radio apparatus according to any or several of the preceding claims, characterized by a two-shell structure of the housing (1),
- whose front side (2) and rear wall (3) are associated with different housing shells (18, 19), the joint between the two housing shells (18, 19) extending approximately centrally between the front side (2) and the rear wall (3) in a joint plane (16) lying perpendicularly to the horizontal plane (15) and to the vertical centre plane (14).

7. A radio apparatus according to any or several of the preceding claims, characterized in that the mains connection plug (4) is a safety-type plug with edge grounding.

**Revendications**

1. Appareil radio comportant une fiche de raccordement au secteur, dans lequel
- la fiche de raccordement au secteur (4) est connecté de façon stationnaire à la paroi arrière (3) de l'appareil, ses pointes de contact (5) saillissant de cette paroi arrière (3), ou forme une partie de cette paroi arrière (3), de manière qu'en position de service, l'appareil radio peut être supporté, par exemple, par une prise de courant fixé dans la paroi d'un édifice, caractérisé par le fait que
- l'axe longitudinal central (17) du haut-parleur (20), qui émet le son par le côté frontal (2) de l'appareil ou par ses ouvertures d'émission du son (22), passe excentriquement au-dessous du plan médian (15), contenant les pointes de contact (5) et
- deux éléments de contrôle en forme de boutons (6, 7) sont disposés symétriquement par rapport au plan médian vertical (14) de l'appareil de radio, qui passe parallèlement aux pointes de contact (5) et perpendiculairement au plan médian horizontal (15), contenant les pointes de contact (5), et au-dessus du plan médian horizontal (15) en dehors de la zone d'émission du son du haut-parleur (20) ou en dehors du boîtier du hauts-parleur (21).

2. Appareil radio selon revendication 1, caractérisé par une forme rectangulaire, plus particulièrement par une forme carrée, de la partie frontale du boîtier (1) de l'appareil, deux des côtés du boîtier étant situés parallèlement à un plan horizontal contenant les pointes de contact (5).

3. Appareil radio selon revendication 1 ou 2, caractérisé par le fait que la fiche de raccordement au secteur (4) est placée au centre de la paroi arrière du boîtier (3).

4. Appareil radio selon revendication 3, caractérisé par le fait que la largeur (8) du boîtier (1) est dimensionnée de telle façon que ce dernier ne gêne pas l'utilisation de la prise voisine lorsqu'il est branché sur une latte de prises ou une prise multiple, et que ses parois latérales (9, 10) en particulier ne dépassent pas la moitié de l'écartement entre deux prises voisines.

5. Appareil radio selon une ou plusieurs des revendications précédentes, caractérisé par un boîtier circulaire (21) de haut parleur ayant son axe central (17) sur le plan médian vertical (14), et intégré dans la paroi du côté frontal de l'appareil.

6. Appareil radio selon une ou plusieurs des revendications précédentes, caractérisé par une structure à double monocoques du boîtier (1),
- dont le côté frontal du boîtier (2) et la paroi arrière du boîtier (3) sont adjoints à de différents monocoques (18, 19), la jointure entre les deux monocoques (18, 19) étant située approximativement au centre entre le côté frontal (3) et la paroi arrière (3) dans un plan de jointure (16) perpendiculaire au plan horizontal (15) et au plan médian vertical (14).

7. Appareil radio selon une ou plusieurs des revendications précédentes, caractérisé par le fait que la fiche de raccordement au secteur (4) est une fiche de prise de courant de sécurité avec prise de terre marginale.

**Fig. 1**

**Fig. 2**

EP 0 229 324 B1

Fig. 5

Fig. 4

Fig. 3